(19) Europäisches Patentamt / European Patent Office / Office européen des brevets

(11) **EP 3 411 668 B1**

(12) **FASCICULE DE BREVET EUROPEEN**

(45) Date de publication et mention de la délivrance du brevet:
**04.03.2020 Bulletin 2020/10**

(21) Numéro de dépôt: **17706552.1**

(22) Date de dépôt: **20.01.2017**

(51) Int Cl.:
*G01D 5/353* (2006.01)    *E21B 47/00* (2012.01)
*E21B 17/01* (2006.01)    *E21B 41/00* (2006.01)
*G01N 25/18* (2006.01)    *G01H 9/00* (2006.01)
*G01K 11/32* (2006.01)

(86) Numéro de dépôt international:
**PCT/FR2017/050120**

(87) Numéro de publication internationale:
**WO 2017/134360 (10.08.2017 Gazette 2017/32)**

(54) **PROCÉDÉ DE SURVEILLANCE DU COMPORTEMENT THERMOMÉCANIQUE D'UNE CONDUITE SOUS-MARINE DE TRANSPORT DE FLUIDES SOUS PRESSION**

VERFAHREN ZUR ÜBERWACHUNG DES THERMOMECHANISCHEN VERHALTENS EINER TIEFSEELEITUNG ZUM TRANSPORT VON UNTER HOHEM DRUCK STEHENDEN FLÜSSIGKEITEN

METHOD FOR MONITORING THE THERMOMECHANICAL BEHAVIOR OF A SUBMARINE CONDUIT FOR TRANSPORTING PRESSURIZED FLUIDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.02.2016 FR 1650826**

(43) Date de publication de la demande:
**12.12.2018 Bulletin 2018/50**

(73) Titulaires:
• **Saipem SA**
  **78180 Montigny-le-Bretonneux (FR)**
• **Cementys**
  **75013 Paris (FR)**

(72) Inventeurs:
• **PIONETTI, François-Régis**
  **50450 La Baleine (FR)**
• **AGOUMI, Jalil**
  **94270 Le Kremlin-bicetre (FR)**
• **SUNDERMANN, Axel**
  **91640 Fontenay-les-briis (FR)**
• **MARAVAL, Damien**
  **92220 Bagneux (FR)**
• **LAMOUR, Vincent**
  **75013 Paris (FR)**

(74) Mandataire: **Cabinet Beau de Loménie**
  **158, rue de l'Université**
  **75340 Paris Cedex 07 (FR)**

(56) Documents cités:
CA-A1- 2 910 468    CN-A- 101 713 638
CN-A- 102 636 730

• MOHAMED N ALAHBABI ET AL: "Long-range distributed temperature and strain optical fibre sensor based on the coherent detection of spontaneous Brillouin scattering with in-line Raman amplification; Long-range distributed temperature and strain optical fibre sensor", MEASUREMENT SCIENCE AND TECHNOLOGY, IOP, BRISTOL, GB, vol. 17, no. 5, 1 mai 2006 (2006-05-01), pages 1082-1090, XP020103497, ISSN: 0957-0233, DOI: 10.1088/0957-0233/17/5/S24

EP 3 411 668 B1

**Description**

Arrière-plan de l'invention

La présente invention se rapporte au domaine général des conduites sous-marines de transport de fluides reposant au fond de la mer ou assurant la liaison fond-surface pour le transfert d'hydrocarbures, par exemple de pétrole et de gaz, issus de puits de production sous-marins.

Les conduites sous-marines de transport de fluides sont couramment utilisées dans la production offshore d'hydrocarbures. Ainsi, dans un champ de production offshore, on exploite généralement plusieurs puits qui peuvent être séparés les uns des autres de plusieurs kilomètres, voire dizaines de kilomètres. Les fluides issus des divers puits doivent être collectés par des conduites posées au fond de la mer et transférés par des conduites de liaison fond-surface depuis une conduite sous-marine reposant au fond de la mer vers une installation en surface qui va les recueillir, par exemple au niveau d'un navire ou d'un point de collecte situé sur la côte.

Il existe différents types de conduites sous-marines utilisées pour le transport de fluides. L'invention s'intéresse plus particulièrement aux conduites coaxiales de type « Pipe In Pipe » ou PIP, c'est-à-dire « conduite dans une conduite », dans laquelle un tube en acier interne transporte les fluides et un tube en acier externe coaxial au précédent, appelé aussi « enveloppe externe », est en contact avec le milieu ambiant, c'est-à-dire avec l'eau.

Généralement, ces conduites coaxiales sont assemblées à terre en éléments de longueur unitaire (on parle de double, triple ou quadruple joints, ci-après indifféremment dénommées « quad-joints » pour quadruple sections de tube), de l'ordre de 10 à 100m selon la capacité de tenue en charge du système de pose. Ces quad-joints sont alors transportées en mer sur un navire de pose.

Lors de la pose, les quad-joints sont raccordés les uns aux autres à bord du navire et au fur et à mesure de leur pose en mer. La pose peut s'effectuer par l'intermédiaire d'une tour de pose en J positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer.

Compte tenu de leur spécificité, les conduites sous-marines de transport de fluides sont conçues pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doivent résister les conduites sous-marines est alors d'environ 10 MPa, soit environ 100 bars pour 1000m de profondeur et d'environ 30 MPa, soit environ 300 bars pour 3000m de profondeur.

Par ailleurs, les conduites sous-marines sont soumises à d'importantes contraintes mécaniques, à la fois au cours de leur pose au fond de la mer par l'intermédiaire de la tour de pose en J qui entraîne d'importantes déformations (notamment des flexions) de chacun des quad-joints de la conduite, mais aussi pendant la phase de production (auto-contraintes thermiques et contraintes dues aux sollicitations extérieures). En effet, lorsque la conduite sous-marine est installée au fond de la mer et que le réseau est en phase de production, le tube interne des quad-joints de la conduite est soumis à la pression élevée des fluides qu'il transporte (cette pression pouvant dépasser les 100 bars). De plus, il est fréquent que le fond marin sur lequel reposent la conduite bouge, ce qui entraîne des déplacements de la conduite, et donc des contraintes sur ces dernières.

Or, les contraintes mécaniques subies par les conduites sous-marines, et plus particulièrement les tubes internes de conduites PIP, ainsi que la température à laquelle elles sont soumises (les hydrocarbures issus des puits de production sous-marins sortent à une température de l'ordre de 70°C), risquent de provoquer des dégâts importants, voire une rupture, des conduites. Des capteurs de surveillance pour des conduites sous-marines sont par exemple montrés dans CN101713638A, CN102636730B, CA2910468A1 ou dans le journal "Measurement Science and Technology", vol. 17, p. 1082-1090 (2006) (doi:10.1088/0957-0233/17/5/S24).

Objet et résumé de l'invention

Il existe donc un besoin de pouvoir surveiller l'intégrité thermomécanique d'une conduite sous-marine de transport de fluides, aussi bien au cours de sa pose qu'en phase de production.

Conformément à l'invention, ce besoin est atteint grâce à un procédé de surveillance du comportement thermomécanique d'une conduite sous-marine de transport de fluides sous pression, la conduite sous-marine étant réalisée par assemblage d'une pluralité d'éléments unitaires de conduite mis bout à bout, le procédé comprenant :

> une étape de détermination d'une signature mécanique propre à chaque élément unitaire de conduite consistant, à l'aide d'au moins un câble de mesure muni d'au moins un capteur à fibre optique utilisant au moins la rétrodiffusion de Brillouin et positionné sur toute la longueur de l'élément unitaire de conduite, à mesurer les déformations subies ou simulées par ledit élément unitaire de conduite lorsqu'il est soumis à terre à différentes sollicitations mécaniques de directions et d'intensités prédéterminées, et, à partir de ces mesures de déformations, à établir une matrice de raideur associée à la signature mécanique de l'élément unitaire de conduite ;

une étape de détermination d'une signature thermique propre à chaque élément unitaire de conduite consistant, à l'aide d'au moins un câble de mesure muni d'au moins un capteur à fibre optique utilisant au moins la rétrodiffusion Raman et positionné sur toute la longueur de l'élément unitaire de conduite, à mesurer les évolutions de températures dudit élément unitaire de conduite lorsqu'il est soumis à terre à différentes puissances électriques de chauffe, et, à partir de ces mesures de températures, à établir une fonction de transfert thermique associée à la signature thermique de l'élément unitaire de conduite ; et

une étape de surveillance consistant à récupérer les variations du signal optique injecté dans les capteurs à fibre optique lorsque la conduite est en service, et, à partir de ces variations du signal optique, à déterminer l'évolution des signatures mécanique et thermique de chaque élément unitaire de conduite.

Par conduite « en service », on entend ici que la conduite est soit en cours de pose, soit opérationnelle pendant la phase de production du réseau.

Le procédé de surveillance selon l'invention est remarquable en ce qu'il utilise des signatures mécaniques et thermiques qui sont propres à chaque élément unitaire (ou quad-joint) de la conduite sous-marine pour surveiller la température et les contraintes mécaniques subies par la conduite. Avant leur pose, au cours de l'étape de détermination d'une signature mécanique, chaque élément unitaire de conduite est testé à terre (en laboratoire ou en usine) et subit différentes sollicitations mécaniques de directions et d'intensités prédéterminées. Les déformations subies ou simulées sur l'élément unitaire de conduite sont mesurées par les capteurs à fibre optique (à chaque capteur à fibre optique est associée la mesure d'un paramètre de déformation de l'élément unitaire de conduite). Au cours de l'étape de surveillance proprement dite, les mesures effectuées par les capteurs à fibre optique sont utilisées pour déterminer l'évolution des signatures mécaniques propres à chaque élément unitaire de conduite, et ainsi pour suivre les déformations subies en service par chacun de ces éléments unitaires de conduite. A partir de la connaissance du comportement mécanique de chaque élément unitaire de conduite, il est alors possible de reconstruire le comportement mécanique global de la conduite sous-marine, aussi bien au cours de sa pose que pendant la phase de production. En particulier, les signatures de chaque élément unitaire de conduite constituent des référentiels qui permettent de localiser les évènements tout au long de la vie de la conduite

Le procédé selon l'invention est par ailleurs tout particulièrement adapté à la technique de pose en J de la conduite sous-marine au cours de laquelle aucune déformation permanente n'est induite à la conduite (on reste sous 90% de la limite élastique de la conduite). Une fois posée, la conduite reste toujours dans un domaine linéaire (à moins de 66% de la limite élastique), ce qui autorise une linéarisation des phénomènes de perturbation subis par la conduite (tels que les déformations).

De même, avant leur pose, au cours de l'étape de détermination d'une signature thermique, chaque élément unitaire de conduite est soumis à différentes puissances de chauffe. Les évolutions de température de l'élément unitaire de conduite sont mesurées par le capteur à fibre optique utilisant la rétrodiffusion Raman. Ces évolutions de température, propres à chaque élément unitaire de conduite, permettent de déterminer des fonctions de transfert thermique dont les valeurs correspondent aux valeurs d'élévation de températures subies par l'élément unitaire de conduite. Au cours de l'étape de surveillance proprement dite, les mesures effectuées par le capteur à fibre optique utilisant la rétrodiffusion Raman sont utilisées pour déterminer l'évolution de la signature thermique propre à chaque élément unitaire de conduite, et ainsi pour suivre la température vue en service par chacun des éléments unitaires de conduite. La connaissance de l'évolution de la signature thermique de chaque élément unitaire de conduite permet notamment de contrôler le fonctionnement des câbles électriques de chauffe et d'observer le vieillissement de l'isolant et l'apparition de couches d'hydrates dans la conduite.

Le procédé de surveillance selon l'invention permet en outre de connaître précisément l'état de la conduite sous-marine au niveau des raccordements entre les différents éléments unitaires de conduite, ce qui n'est pas possible avec une ligne unique de mesures sur toute la longueur de la conduite.

La matrice de raideur associée à la signature mécanique de chaque élément unitaire de conduite peut comprendre des valeurs correspondant aux valeurs de déformations subies par l'élément unitaire de conduite lorsqu'il a été soumis à terre aux différentes sollicitations mécaniques. Ainsi, la matrice de raideur qui est établie à l'aide de ces mesures représente l'identité mécanique propre à chaque élément unitaire de conduite. Dans ce cas, la détermination des déformations subies par chaque élément unitaire de conduite en service permet de calculer la matrice de raideur associée à la signature mécanique de chaque élément unitaire de conduite.

De même, la fonction de transfert thermique associée à la signature thermique de chaque élément unitaire de conduite peut comprendre des valeurs correspondant aux valeurs d'élévations de températures subies par l'élément unitaire de conduite lorsqu'il a été soumis à terre aux différentes puissances de chauffe. Dans ce cas, la température vue en service par chacun des éléments unitaires de conduite permet de calculer ces fonctions de transfert thermique.

Les sollicitations mécaniques de directions et d'amplitudes prédéterminées appliquées à terre à chaque élément unitaire de conduite peuvent comprendre l'une ou plusieurs des sollicitations suivantes : sollicitation en torsion, sollicitation en traction/compression, sollicitation en flexions, et sollicitation en pression.

Les câbles de mesure à capteurs à fibre optique peuvent être positionnés sur les éléments unitaires de conduite de sorte à s'étendre sensiblement parallèlement à un axe longitudinal de ladite conduite.

De préférence, les capteurs à fibre optique des câbles de mesure utilisant la rétrodiffusion de Brillouin et Rayleigh sont des fibres monomodes et les capteurs à fibre optique des câbles de mesure utilisant la rétrodiffusion de Raman sont des fibres multimodes.

Dans une application à la surveillance d'une conduite PIP, chaque élément unitaire de conduite peut comprendre un tube interne monté à l'intérieur d'un tube externe de façon coaxiale à celui-ci, les câbles de mesure à capteurs à fibre optique étant positionnés sur le tube interne dudit élément unitaire de conduite.

De façon avantageuse également, le procédé comprend en outre :

une étape de détermination d'une signature acoustique et vibratoire propre à chaque élément unitaire de conduite consistant, à l'aide du câble de mesure muni du capteur à fibre optique utilisant au moins la rétrodiffusion de Rayleigh et positionné sur toute la longueur de l'élément unitaire de conduite, à mesurer les variations de fréquences de chaque élément unitaire de conduite lorsqu'il est soumis à terre à différentes sollicitations acoustiques et vibratoires, et, à partir de ces variations de bruit, à établir une signature acoustique de chaque élément unitaire de conduite ; et

une étape de surveillance de l'intégrité acoustique et vibratoire de la conduite consistant à récupérer les variations de fréquences du signal optique injecté dans les capteurs à fibre optique lorsque la conduite est en service, et, à partir de ces variations de fréquences, à déterminer l'évolution de la signature acoustique et vibratoire de chaque élément unitaire de conduite.

Ainsi, les capteurs à fibre optique utilisant la rétrodiffusion de Brillouin peuvent non seulement fournir des informations sur les contraintes mécaniques subies par la conduite, mais également des informations sur les variations de sources vibrantes environnantes. Parmi ces sources de vibrations environnantes, il est notamment possible de distinguer celles générées par l'élément unitaire de conduite sur lequel sont positionnés les capteurs à fibre optique et celle, générées par l'environnement extérieur (en l'occurrence le fond de la mer et tout ce qui lui est relié). A partir de ces vibrations induites, l'intégrité de la conduite peut être surveillée à partir de l'évolution des signatures acoustiques et vibratoires de chacun de ces éléments unitaires de conduite.

Typiquement, les variations de bruits détectées à l'intérieur de la conduite peuvent permettre de déterminer les proportions par phases du fluide qui circule et leur vitesse respective. En particulier, pour les conduites de production, il est ainsi possible de détecter la formation de poches de gaz qui peuvent générer d'importants dommages dus aux vibrations à faible fréquence. Les variations de bruits continues peuvent permettre de détecter la formation de graisse lourde sur les parois de la conduite qui réduit le flux et augmente localement la vitesse du fluide. Les variations de bruits peuvent encore être symptomatiques au déplacement de la conduite (type expansion latérale ou verticale) pouvant engendrer des endommagements (fatigue) de celle-ci.

Quant aux variations de bruits à l'extérieur de la conduite sous-marine, elles servent notamment lors d'une intervention extérieure programmée sur la conduite (par exemple une intervention de contrôle au moyen d'un véhicule sous-marin téléguidé). En effet, au cours de ces interventions, la reconnaissance des variations de bruits permet de déterminer au mètre près la position du véhicule de contrôle par rapport à la conduite sous-marin afin de mieux guider le véhicule et de corréler sa vision externe avec la vision acoustique interne à la conduite. D'autres bruits extérieurs peuvent être évalués et sortis des analyses du comportement de la conduite car correspondant à des phénomènes physiques naturels connus comme des glissements de terrains ou des tsunamis dont le bruit peut être lointain et qui ne sont pas susceptibles de créer des endommagements à la conduite.

Les sollicitations acoustiques et vibratoires appliquées à terre à chaque élément unitaire de conduite peuvent comprendre : l'émission de bruits à l'intérieur de l'élément unitaire de conduite rempli d'air par l'intermédiaire d'une barre reliant deux extrémités dudit élément unitaire de conduite, l'émission de bruits à l'intérieur de l'élément unitaire de conduite rempli d'eau par l'intermédiaire d'une barre reliant deux extrémités dudit élément unitaire de conduite, et la mise en vibration globale de l'élément unitaire de conduite à l'aide de plots vibrant.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue schématique d'une conduite sous-marine PIP à laquelle s'applique le procédé de surveillance selon l'invention ;
- la figure 2 est une vue en coupe selon II-II de la figure 1 ; et
- la figure 3 est une vue schématique d'un élément unitaire de conduite sous-marine auquel sont appliquées différentes sollicitations mécaniques en vue d'établir sa signature mécanique.

## Description détaillée de l'invention

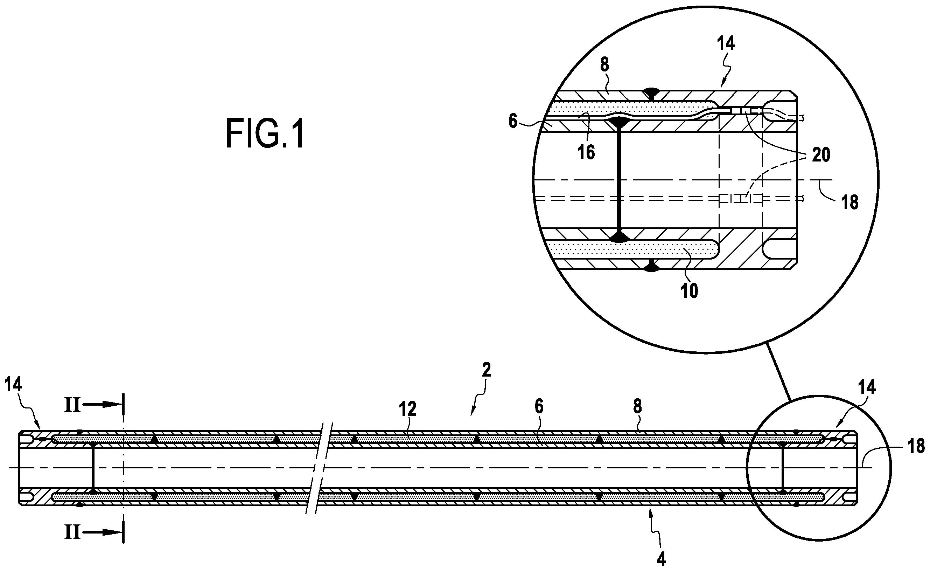

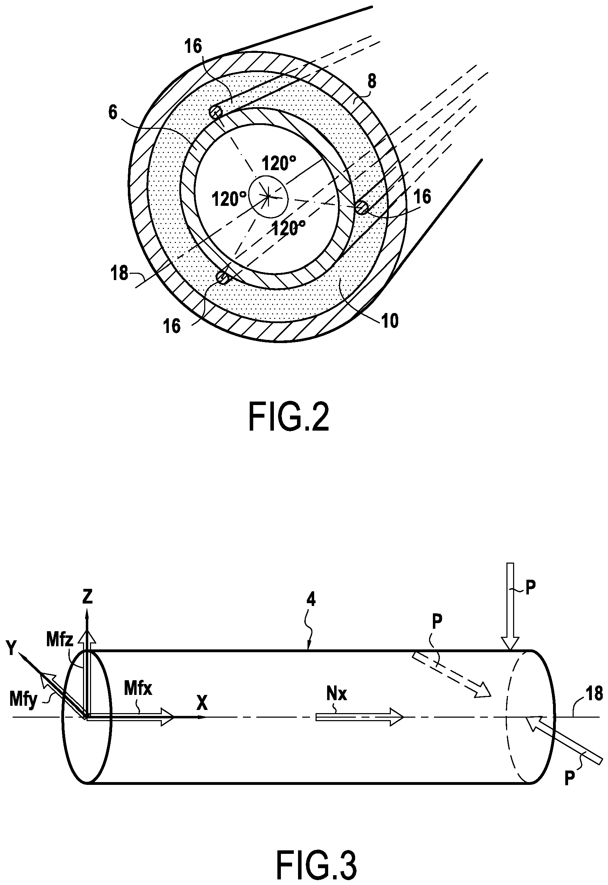

L'invention s'applique à toute conduite sous-marine reposant au fond de la mer et assurant un transport entre des puits de production d'hydrocarbures sous-marins, notamment de pétrole et de gaz, et une installation de surface, telle que la conduite sous-marine 2 représentée sur les figures 1 et 2.

La conduite sous-marine 2 représentée sur ces figures est typiquement assemblée à terre en plusieurs sections de conduite de longueur unitaire 4 de l'ordre de 10 à 100 m selon la capacité de tenue du système de pose. On parle également de « joints », notamment de « double joints » pour deux éléments unitaires de conduite assemblés entre eux, « triple joints » pour trois éléments unitaires de conduite assemblés entre eux, « quadruple joints » pour quatre éléments unitaires de conduite assemblés entre eux, etc. Pour la suite de la description, on emploiera de façon générique le terme « quad-joint » pour désigner un élément unitaire de conduite 4. Lors de la pose, ces quad-joints 4 sont raccordés les uns aux autres à bord du navire et au fur et à mesure de leur pose en mer.

Par ailleurs, la conduite sous-marine 2 est une conduite coaxiale de type « Pipe in Pipe » (ou « PIP »), c'est-à-dire que chaque quad-joint (ou élément unitaire de conduite) 4 comprend un tube en acier interne 6 destiné à transporter les hydrocarbures issus de puits de production et un tube en acier externe 8, coaxial au tube interne et appelé « enveloppe externe », qui est en contact direct avec l'eau environnante.

De façon connue, l'espace annulaire 10 formé entre le tube interne 6 et le tube externe 8 de chaque quad-joint 4 peut être rempli d'un matériau isolant 12 (ou être vidé de tout gaz) de sorte à former une couche d'isolant thermique limitant la déperdition de chaleur vers le milieu ambiant. A chacune de ces extrémités, le tube interne 6 peut être solidarisé au tube externe 8 par l'intermédiaire de pièces de jonction 14 qui viennent fermer l'espace annulaire 10.

Selon l'invention, il est prévu de surveiller l'intégrité thermomécanique d'une telle conduite sous-marine 2, c'est-à-dire de surveiller l'évolution des signatures mécaniques et thermiques de chacun des éléments unitaires de conduite qui la constituent, lors de sa pose au fond de la mer et pendant la phase de production du réseau (c'est-à-dire lorsqu'elle est en service).

Le procédé de surveillance selon l'invention prévoit deux étapes principales : des étapes dites de mesure initiale (ou d'étalonnage) au cours de laquelle la signature mécanique initiale, la signature thermique initiale et la signature acoustique et vibratoire initiale de chaque quad-joint de la conduite sous-marine sont déterminées ; et une étape de surveillance proprement dite au cours de laquelle, à partir à des sollicitations thermomécaniques appliquées à chaque quad-joint et des mesures réalisées par des capteurs à fibre optique lors de la pose de la conduite sous-marine et/ou pendant la phase de production du réseau, la température, les évolutions des signatures mécaniques, thermiques, et acoustiques et vibratoires sont déterminées.

## Etape d'étalonnage mécanique

Cette étape d'étalonnage mécanique consiste à tester à terre chaque quad-joint de la conduite sous-marine pour en obtenir sa signature mécanique initiale.

A cet effet, chaque quad-joint subit en laboratoire ou en usine une série de différentes sollicitations mécaniques de directions et d'intensités prédéterminées et les déformations subies par le quad-joint au cours de ce test sont mesurées par des capteurs à fibre optique.

Plus précisément, le quad-joint 4 est équipé de câbles de mesure 16 munis de capteurs à fibre optique, chaque capteur à fibre optique étant destiné à mesurer un seul et même paramètre de déformation du quad-joint.

Les câbles de mesure 16 doivent être positionnés sur le tube interne 6 du quad-joint 4 (ils sont par exemple collés sur la surface externe de celui-ci) et s'étendre longitudinalement entre les deux extrémités du quad-joint. Par exemple, dans l'exemple illustré sur la figure 2, les câbles de mesure 16 sont au nombre de trois, s'étendent parallèlement à l'axe longitudinal 18 du quad-joint et sont espacés les uns des autres de 120°. Bien entendu, d'autres dispositions des câbles de mesure pourraient être envisagées.

Les fibres optiques équipant les câbles de mesure 16 sont des fibres monomodes utilisant la rétrodiffusion Brillouin et Rayleigh pour les capteurs destinés à mesurer les contraintes mécaniques subies par le quad-joint et les variations de bruit acoustique et vibratoire, et une fibre multimode utilisant la rétrodiffusion Raman pour le capteur destiné à mesurer la température du quad-joint (au cours de l'étape d'étalonnage thermique décrite ultérieurement).

Dans l'exemple décrit ci-après, les sollicitations mécaniques appliquées aux quad-joints de la conduite sous-marine sont les suivantes : sollicitation en torsion (autour de l'axe longitudinal 18 des quad-joints), sollicitation en flexions (dans un plan YZ transversal aux quad-joints), sollicitation en traction/compression (dans la direction de l'axe longitudinal des quad-joints) et sollicitation en pression interne aux quad-joints.

Ces sollicitations sont toutes définies par une direction et une intensité d'application qui sont prédéterminées. Ainsi, comme représenté sur la figure 3, la sollicitation en torsion appliquée au quad-joint 4 consiste en la création d'un moment de torsion (représenté Mtx sur la figure 3) dont la direction d'application est suivant l'axe X d'un repère orthonormé (O, X, Y, Z) propre au quad-joint. De même, la sollicitation en flexions appliquée au quad-joint consiste en la création de deux moments fléchissant (représentés Mfy et Mfz sur la figure 3) dont les directions d'application sont respectivement suivant les axes Y et Z du repère (O, X, Y, Z). La sollicitation en traction/compression appliquée au quad-joint (représentée sur la figure 3 par Nx) présente une direction d'application selon l'axe X. Enfin, la sollicitation en pression est représentée par P sur la figure 3 et sa direction d'application est radiale à la conduite.

Au cours du test, les différentes sollicitations détaillées ci-dessus sont appliquées à chaque quad-joint et un appareil de mesure optoélectronique de type OTDR (« Optical Time Domain Reflectometer » pour Réflectomètre Optique Temporel) communément utilisé pour caractériser les fibres optiques permet de mesurer les valeurs de déformation, notées $\varepsilon_i$, subies par le quad-joint.

Comme indiqué précédemment, chaque capteur à fibre optique mesure une seule valeur de déformation $\varepsilon_i$, de sorte que pour obtenir l'ensemble des valeurs de déformation du quad-joint correspondant aux sollicitations Mtx, Mfy, Mfz, Nx et P décrites ci-avant, il est nécessaire de disposer de 5 capteurs à fibre optique différentes pour un même quad-joint.

Ainsi, grâce aux mesures $\varepsilon_1$ à $\varepsilon_5$ obtenues par les 5 capteurs à fibre optique, il est possible d'obtenir, dans le cas de matériaux élastiques, la matrice de raideur $\Omega$ qui vérifie l'équation (1) suivante :

$$\begin{pmatrix} \varepsilon1 \\ \varepsilon2 \\ \varepsilon3 \\ \varepsilon4 \\ \varepsilon5 \end{pmatrix} = \underbrace{\begin{pmatrix} a11 & a12 & a13 & a14 & a15 \\ a21 & a22 & a23 & a24 & a25 \\ a31 & a32 & a33 & a34 & a35 \\ a41 & a42 & a43 & a44 & a45 \\ a51 & a52 & a53 & a54 & a55 \end{pmatrix}}_{\Omega} \times \begin{pmatrix} Mtx \\ Mfy \\ Mfz \\ Nx \\ P \end{pmatrix} \qquad (1)$$

A partir des valeurs de déformation $\varepsilon_1$ à $\varepsilon_5$ mesurées par les capteurs à fibre optique et des valeurs d'intensité Mtx, Mfy, Mfz, Nx des différentes sollicitations mécaniques appliquées au quad-joint lors de l'étape d'étalonnage, il est alors possible de déterminer l'ensemble des paramètres a11, a12, ..., a55 de la matrice de raideur $\Omega$ propre au quad-joint. Comme les fibres optiques parcourent des chemins différents en surface du tube interne du quad-joint, cette matrice est inversable. Lors des essais d'étalonnage mécanique, les sollicitations doivent être limitées dans le domaine élastique des matériaux constitutifs du quad-joint.

Cette matrice de raideur $\Omega$ constitue une signature mécanique qui est propre à chaque quad-joint destiné à constituer la conduite sous-marine. En effet, les paramètres et les tolérances des matériaux constitutifs (concentricité et épaisseur des tubes, raideur de l'isolant inter-annulaire et des entretoises, caractéristiques des joints soudés, etc.) sont différents pour chaque quad-joint, de sorte que la matrice de raideur varie d'un quad-joint à un autre.

Les signatures mécaniques se présentent sous la forme de fichiers numériques qui sont stockés à bord d'une mémoire d'un système informatique équipant le navire de pose et/ou l'installation de surface pour être utilisés ultérieurement pour la surveillance du comportement mécanique de la conduite sous-marine au cours de l'étape de surveillance proprement dite décrite ci-après.

Etape d'étalonnage thermique

Cette étape d'étalonnage thermique se déroule dans les mêmes conditions opératoires que l'étalonnage mécanique, à savoir que l'on équipe chaque quad-joint de la conduite sous-marine d'au moins un câble de mesure muni d'au moins un capteur à fibre optique utilisant au moins la rétrodiffusion Raman. Le capteur à fibre optique, typiquement multimode, est plus précisément inséré à l'intérieur de l'un des câbles de mesure 16 équipant chaque quad-joint.

Chaque quad-joint ainsi équipé est alors soumis à terre (i.e. en laboratoire ou en usine) à différentes puissances électriques de chauffe. Les évolutions de température de chaque quad-joint soumis à ces puissances de chauffe sont mesurées par un réflectomètre optique temporel (OTDR) utilisé pour caractériser les capteurs à fibre optique utilisant la rétrodiffusion Raman.

A partir de ces évolutions de température, il est possible de déterminer la signature thermique de chaque quad-joint, cette signature thermique comprenant des fonctions a(t) et b(t) de transfert thermique corrélant la puissance thermique injectée à un instant (t) à l'élévation de température et vérifiant ainsi l'équation (2) suivante :

$$T(t) = a(t) \times P_{\text{électrique}} + b(t) \qquad (2)$$

Dans cette équation, T(t) représente l'évolution de la température du tube interne de chaque quad-joint mesurée par le capteur à fibre optique et $P_{\text{électrique}}$ correspond à la puissance électrique injectée dans le système de chauffe. Ainsi, les valeurs des fonctions a(t) et b(t) de transfert thermique correspondent aux valeurs d'élévation de température subie par le tube interne du quad-joint lorsqu'il a été soumis à terre aux différentes puissances de chauffe.

Comme pour les signatures mécaniques, les signatures thermiques des quad-joint se présentent sous la forme de fichiers numériques qui sont stockés à bord d'une mémoire du système informatique équipant le navire de pose et/ou l'installation de surface pour être utilisés ultérieurement pour la surveillance du comportement mécanique de la conduite sous-marine au cours de l'étape de surveillance proprement dite.

Etape d'étalonnage acoustique

Cette étape d'étalonnage acoustique se déroule dans les mêmes conditions opératoires que la phase d'étalonnage mécanique. Chaque quad-joint équipé de son capteur à fibre optique utilisant la rétrodiffusion de Brillouin est soumis à terre (i.e. en laboratoire ou en usine) à différentes sollicitations acoustiques et vibratoires.

Ces sollicitations acoustiques comprennent l'émission de bruits (dans un spectre de fréquences utile compris typiquement entre 0 et 50 kHz) dans différentes configurations : émission de bruits à l'intérieur du quad-joint rempli d'air par l'intermédiaire d'une barre reliant les deux extrémités du quad-joint, émission de bruits à l'intérieur du quad-joint rempli d'eau par l'intermédiaire d'une barre reliant ses deux extrémités, et émission de bruits à l'extérieur du quad-joint rempli au préalable d'air puis d'eau selon un protocole calibré pour chaque quad-joint (par exemple au moyen d'un système émettant une vibration sonore calibrée). Quant aux sollicitations vibratoires, elles peuvent être réalisées par la mise en vibration globale de l'élément unitaire de conduite à l'aide de plots vibrant.

A chaque émission de bruits et de vibrations lors de cette étape de calibration, le réflectomètre optique temporel (OTDR) utilisé pour caractériser les capteurs à fibre optique permet de mesurer les variations de fréquences du quad-joint. Ces mesures se présentent par exemple sous une forme matricielle et constituent pour chaque quad-joint sa signature acoustique et vibratoire (c'est-à-dire son référentiel de base).

Comme pour les signatures mécaniques et thermiques, les signatures acoustiques de tous les quad-joints se présentent sous la forme de fichiers numériques qui sont stockés à bord d'une mémoire du système informatique équipant le navire de pose et/ou l'installation de surface pour être utilisés ultérieurement pour la surveillance du comportement de la conduite sous-marine au cours de l'étape de surveillance proprement dite décrite ci-dessous.

Etape de surveillance

Au cours de cette étape, les différents quad-joints 4 destinés à former la conduite sous-marine 2 sont raccordés les uns aux autres à bord du navire et au fur et à mesure de leur pose en mer comme cela est connu de l'homme de l'art.

Ce raccordement implique notamment que les câbles de mesure 16 installés sur les tubes internes 6 des différents quad-joints soient raccordés entre eux, par exemple en les faisant traverser des perçages 20 formés dans les pièces de jonction 14 (voir la loupe de la figure 1).

De plus, au cours de la pose, les quad-joints 4 sont indexés en rotation les uns par rapport aux autres, c'est-à-dire que le repère (O, X, Y, Z) propre à chaque quad-joint est repéré aussi bien en rotation qu'en translation dans un repère plus général à travers un système d'information géographique (SIG).

Au cours de la pose, et pendant toute la phase de production du réseau, les mesures réalisées par le réflectomètre optique temporel (OTDR) des capteurs à fibres optiques utilisant la rétrodiffusion de Brillouin sont analysées pour déterminer le comportement de la conduite sous-marine aux déformations qu'elle peut subir. Cette étape de récupération et d'analyse des mesures prises par le réflectomètre optique temporel peut être réalisée par le système informatique équipé de moyens logiciels adéquats et présent à bord du navire de pose et/ou de l'installation de surface.

En particulier, il est possible de calculer, grâce à un logiciel de calcul équipant le système informatique de collecte des mesures, les valeurs de déformations Mtx, Mfy, Mfz, Nx subies par chaque quad-joint. En partant de l'équation (1) décrite ci-dessus, il est également possible de déterminer l'évolution de la signature mécanique de chaque quad-joint, cette dernière étant donnée par l'équation (3) ci-dessous :

$$\begin{pmatrix} a11 & a12 & a13 & a14 & a15 \\ a21 & a22 & a23 & a24 & a25 \\ a31 & a32 & a33 & a34 & a35 \\ a41 & a42 & a43 & a44 & a45 \\ a51 & a52 & a53 & a54 & a55 \end{pmatrix} = \begin{pmatrix} \varepsilon1 \\ \varepsilon2 \\ \varepsilon3 \\ \varepsilon4 \\ \varepsilon5 \end{pmatrix} \times \begin{pmatrix} Mtx \\ Mfy \\ Mfz \\ Nx \\ P \end{pmatrix}^{-1} \qquad (3)$$

De la sorte, en suivant l'évolution des signatures mécaniques des quad-joint, il est possible de connaître à tout moment au cours de la pose de la conduite sous-marine et pendant toute la phase de production du réseau l'intégrité mécanique de la conduite à partir des sollicitations subies par chaque quad-joint formant la conduite sous-marine. Notamment, il est ainsi possible d'identifier avec précision à quel endroit de la conduite sous-marine se produit une déformation importante de la conduite pouvant conduire à des dégâts importants (endommagement mécanique identifié par une baisse de raideur), voire une rupture, de la conduite, ou la formation d'un bouchon à l'intérieur de la conduite pouvant également occasionner une rupture de la conduite. Cette localisation est permise grâce aux phases d'étalonnage qui permettent de connaître précisément les longueurs et la localisation des fibres déployées dans la conduite sous-marine.

La surveillance des signatures thermiques de la conduite sous-marine pendant toute la phase de production du réseau est obtenue à partir des évolutions thermiques subies par la conduite.

Plus précisément, en partant de l'équation (2) décrite ci-dessus et des données recueillies par le réflectomètre optique temporel (OTDR) des capteurs à fibre optique utilisant la rétrodiffusion, il est possible, à l'aide du logiciel de calcul équipant le système informatique, de déterminer l'évolution de la température du tube interne de la conduite sous-marine à chaque instant (en particulier pendant toute la phase de production), à chaque endroit de celui-ci, et en fonction de la puissance électrique injectée dans le système de chauffe de la conduite (cette injection étant typiquement réalisés par des câbles électriques enroulés autour des tubes internes des quad-joints pour les chauffer par effet Joule). Cette détermination des signatures thermiques propres à chaque quad-joint de la conduite en fonction de la puissance électrique de chauffe est rendue possible grâce à la présence des capteurs à fibre optique.

La surveillance de l'évolution de la température des tubes internes des quad-joints de la conduite sous-marine en fonction de la puissance électrique injectée présente de nombreux avantages. Elle permet notamment de contrôler le fonctionnement des câbles électriques de chauffe et d'observer l'éventuelle dégradation des signatures thermiques des quad-joints de la conduite. En effet, la dégradation des signatures thermiques est caractéristique du vieillissement de l'isolant de la conduite (par condensation ou perte du vide) ou de l'apparition de couches d'hydrates dans la conduite interne.

Quant à la surveillance signatures acoustiques et vibratoires de la conduite sous-marine, elle est obtenue en comparant les mesures réalisées pendant toute la phase de production du réseau par le réflectomètre optique temporel (OTDR) des capteurs à fibres optiques utilisant la rétrodiffusion de Brillouin avec les signatures acoustiques et vibratoires établies pour chaque quad-joint lors de l'étape d'étalonnage acoustique.

Cette étape de récupération et d'analyse des mesures prises par le réflectomètre optique temporel peut être réalisée par le système informatique équipé de moyens logiciels adéquats et présent à bord du navire de pose et/ou de l'installation de surface.

On notera que les signatures mécaniques et thermiques propres à chaque quad-joint peuvent également être utilisées pour contrôler la qualité de fabrication des quad-joints en vérifiant que les paramètres de la matrice de raideur et les fonctions de rétrodiffusion thermique de chaque quad-joint restent dans une plage de valeurs prédéfinies.

## Revendications

1. Procédé de surveillance du comportement thermomécanique d'une conduite sous-marine de transport de fluides sous pression, la conduite sous-marine (2) étant réalisée par assemblage d'une pluralité d'éléments unitaires de conduite (4) mis bout à bout, le procédé comprenant :

   une étape de détermination d'une signature mécanique propre à chaque élément unitaire de conduite consistant, à l'aide d'au moins un câble de mesure (16) muni d'au moins un capteur à fibre optique utilisant au moins la rétrodiffusion de Brillouin et positionné sur toute la longueur de l'élément unitaire de conduite, à mesurer les déformations subies ou simulées par ledit élément unitaire de conduite lorsqu'il est soumis à terre à différentes sollicitations mécaniques de directions et d'intensités prédéterminées, et, à partir de ces mesures de déformations, à établir une matrice de raideur associée à la signature mécanique de l'élément unitaire de conduite ;
   une étape de détermination d'une signature thermique propre à chaque élément unitaire de conduite consistant, à l'aide d'au moins un câble de mesure muni d'au moins un capteur à fibre optique utilisant au moins la rétrodiffusion Raman et positionné sur toute la longueur de l'élément unitaire de conduite, à mesurer les évolutions de températures dudit élément unitaire de conduite lorsqu'il est soumis à terre à différentes puissances électriques de chauffe, et, à partir de ces mesures de températures, à établir une fonction de transfert thermique associée à la signature thermique de l'élément unitaire de conduite ; et

une étape de surveillance consistant à récupérer les variations du signal optique injecté dans les capteurs à fibre optique lorsque la conduite est en service, et, à partir de ces variations du signal optique, à déterminer l'évolution des signatures mécanique et thermique de chaque élément unitaire de conduite.

2. Procédé selon la revendication 1, dans lequel la matrice de raideur associée à la signature mécanique de chaque élément unitaire de conduite comprend des valeurs correspondant aux valeurs de déformations subies par l'élément unitaire de conduite lorsqu'il a été soumis à terre aux différentes sollicitations mécaniques, et dans lequel la fonction de transfert thermique associée à la signature thermique de chaque élément unitaire de conduite comprend des valeurs correspondant aux valeurs d'élévations de températures subies par l'élément unitaire de conduite lorsqu'il a été soumis à terre aux différentes puissances de chauffe.

3. Procédé selon la revendication 2, dans lequel la détermination des déformations subies par chaque élément unitaire de conduite permet de calculer les valeurs de la matrice de raideur associée à la signature mécanique de chaque élément unitaire de conduite.

4. Procédé selon l'une quelconque des revendications 1 à 3, dans lequel les sollicitations mécaniques de directions et d'amplitudes prédéterminées appliquées à terre à chaque élément unitaire de conduite comprennent l'une ou plusieurs des sollicitations suivantes : sollicitation en torsion, sollicitation en traction/compression, sollicitation en flexions, et sollicitation en pression.

5. Procédé selon l'une quelconque des revendications 1 à 4, dans lequel les câbles de mesure à capteurs à fibre optique sont positionnés sur les éléments unitaires de conduite de sorte à s'étendre sensiblement parallèlement à un axe longitudinal (18) de ladite conduite.

6. Procédé selon l'une quelconque des revendications 1 à 5, dans lequel les capteurs à fibre optique des câbles de mesure utilisant la rétrodiffusion de Brillouin sont des fibres monomodes.

7. Procédé selon l'une quelconque des revendications 1 à 6, dans lequel les capteurs à fibre optique des câbles de mesure utilisant la rétrodiffusion de Raman sont des fibres multimodes.

8. Procédé selon l'une quelconque des revendications 1 à 7, dans lequel chaque élément unitaire de conduite (4) comprend un tube interne (6) monté à l'intérieur d'un tube externe (8) de façon coaxiale à celui-ci, les câbles de mesure à capteurs à fibre optique étant positionnés sur le tube interne dudit élément unitaire de conduite.

9. Procédé selon l'une quelconque des revendications 1 à 8, comprenant en outre :

une étape de détermination d'une signature acoustique et vibratoire propre à chaque élément unitaire de conduite consistant, à l'aide du câble de mesure muni du capteur à fibre optique utilisant au moins la rétrodiffusion de Brillouin et positionné sur toute la longueur de l'élément unitaire de conduite, à mesurer les variations de fréquences de chaque élément unitaire de conduite lorsqu'il est soumis à terre à différentes sollicitations acoustiques et vibratoires, et, à partir de ces variations de bruit, à établir une signature acoustique de chaque élément unitaire de conduite ; et

une étape de surveillance de l'intégrité acoustique et vibratoire de la conduite consistant à récupérer les variations de fréquences du signal optique injecté dans les capteurs à fibre optique lorsque la conduite est en service, et, à partir de ces variations de fréquences, à déterminer l'évolution de la signature acoustique et vibratoire de chaque élément unitaire de conduite.

10. Procédé selon la revendication 9, dans lequel les sollicitations acoustiques et vibratoires appliquées à terre à chaque élément unitaire de conduite comprennent : l'émission de bruits à l'intérieur de l'élément unitaire de conduite rempli d'air par l'intermédiaire d'une barre reliant deux extrémités dudit élément unitaire de conduite, l'émission de bruits à l'intérieur de l'élément unitaire de conduite rempli d'eau par l'intermédiaire d'une barre reliant deux extrémités dudit élément unitaire de conduite, et la mise en vibration globale de l'élément unitaire de conduite à l'aide de plots vibrant.

**Patentansprüche**

1. Verfahren zum Überwachen des thermomechanischen Verhaltens einer Tiefseeleitung zum Transport von unter Druck stehenden Fluiden, wobei die Tiefseeleitung (2) durch Zusammenbau von mehreren aneinandergefügten Leitungseinheitselementen (4) ausgeführt wird und das Verfahren umfasst:

   einen Schritt des Bestimmens einer mechanischen Signatur, die jedem Leitungseinheitselement eigen ist, der darin besteht, mittels mindestens eines Messkabels (16), das mit mindestens einem optischen Fasersensor versehen ist, der mindestens die Brillouin-Rückstreuung nutzt und auf der gesamten Länge des Leitungseinheitselements positioniert ist, die Verformungen zu messen, die durch das Leitungseinheitselement erfahren oder simuliert werden, wenn es an Land verschiedenen mechanischen Beanspruchungen mit vorbestimmten Richtungen und Stärken ausgesetzt wird, und, ausgehend von diesen Verformungsmessungen, eine Steifigkeitsmatrix zu erstellen, die der mechanischen Signatur des Leitungseinheitselements zugehörig ist,
   einen Schritt des Bestimmens einer thermischen Signatur, die jedem Leitungseinheitselement eigen ist, der darin besteht, mittels mindestens eines Messkabels, das mit mindestens einem optischen Fasersensor versehen ist, der mindestens die Raman-Rückstreuung nutzt und auf der gesamten Länge des Leitungseinheitselements positioniert ist, die Temperaturentwicklungen des Leitungseinheitselements zu messen, wenn es an Land verschiedenen elektrischen Heizleistungen ausgesetzt wird, und, ausgehend von diesen Temperaturmessungen, eine Wärmeübertragungsfunktion zu erstellen, die der thermischen Signatur des Leitungseinheitselements zugehörig ist, und
   einen Schritt des Überwachens, der darin besteht, die Schwankungen des in die optischen Fasersensoren eingespeisten optischen Signals zu sammeln, wenn die Leitung in Betrieb ist, und, ausgehend von diesen Schwankungen des optischen Signals, die Entwicklung der mechanischen und thermischen Signaturen von jedem Leitungseinheitselement zu bestimmen.

2. Verfahren nach Anspruch 1, wobei die Steifigkeitsmatrix, die der mechanischen Signatur von jedem Leitungseinheitselement zugehörig ist, Werte umfasst, die den Werten von Verformungen entsprechen, die das Leitungseinheitselement erfahren hat, als es an Land verschiedenen mechanischen Beanspruchungen ausgesetzt wurde, und wobei die Wärmeübertragungsfunktion, die der thermischen Signatur von jedem Leitungseinheitselement zugehörig ist, Werte umfasst, die den Werten von Temperaturanstiegen entsprechen, die das Leitungseinheitselement erfahren hat, als es an Land den verschiedenen Heizleistungen ausgesetzt wurde.

3. Verfahren nach Anspruch 2, wobei die Bestimmung der Verformungen, die jedes Leitungseinheitselement erfährt, das Berechnen der Werte der Steifigkeitsmatrix ermöglicht, die der mechanischen Signatur von jedem Leitungseinheitselement zugehörig ist.

4. Verfahren nach einem der Ansprüche 1 bis 3, wobei die mechanischen Beanspruchungen mit vorbestimmten Richtungen und Amplituden, die an Land auf jedes Leitungseinheitselement angewandt werden, eine oder mehrere der folgenden Beanspruchungen umfassen: Torsionsbeanspruchung, Zug-/Stauchbeanspruchung, Biegungsbeanspruchung und Druckbeanspruchung.

5. Verfahren nach einem der Ansprüche 1 bis 4, wobei die Messkabel mit optischen Fasersensoren derart auf den Leitungseinheitselementen positioniert sind, dass sie sich im Wesentlichen parallel zu einer Längsachse (18) der Leitung erstrecken.

6. Verfahren nach einem der Ansprüche 1 bis 5, wobei die optischen Fasersensoren der Messkabel, welche die Brillouin-Rückstreuung nutzen, Einmodenfasern sind.

7. Verfahren nach einem der Ansprüche 1 bis 6, wobei die optischen Fasersensoren der Messkabel, welche die Raman-Rückstreuung nutzen, Multimodenfasern sind.

8. Verfahren nach einem der Ansprüche 1 bis 7, wobei jedes Leitungseinheitselement (4) ein Innenrohr (6) umfasst, das im Inneren eines Außenrohrs (8) auf koaxiale Art und Weise daran montiert ist, wobei die Messkabel mit optischen Fasersensoren auf dem Innenrohr des Leitungseinheitselements positioniert sind.

9. Verfahren nach einem der Ansprüche 1 bis 8, ferner umfassend:

   einen Schritt des Bestimmens einer akustischen und Vibrationssignatur, die jedem Leitungseinheitselement eigen ist, der darin besteht, mittels des Messkabels, das mit dem optischen Fasersensor versehen ist, der mindestens die Brillouin-Rückstreuung nutzt und auf der gesamten Länge des Leitungseinheitselements positioniert ist, die Frequenzschwankungen von jedem Leitungseinheitselement zu messen, wenn es an Land verschiedenen akustischen und Vibrationsbeanspruchungen ausgesetzt wird, und, ausgehend von diesen Schallvibrationen, eine akustische Signatur von jedem Leitungseinheitselement zu erstellen, und

einen Schritt des Überwachens der akustischen und Vibrationsintegrität der Leitung, der darin besteht, die Frequenzschwankungen des in die optischen Fasersensoren eingespeisten optischen Signals zu sammeln, wenn die Leitung in Betrieb ist, und, ausgehend von diesen Frequenzschwankungen, die Entwicklung der akustischen und Vibrationssignatur von jedem Leitungseinheitselement zu bestimmen.

10. Verfahren nach Anspruch 9, wobei die akustischen und Vibrationsbeanspruchungen, die an Land auf jedes Leitungseinheitselement angewandt werden, umfassen: die Emission von Schall im Inneren des mit Luft gefüllten Leitungseinheitselements über einen Stab, der zwei Enden des Leitungseinheitselements verbindet, die Emission von Schall im Inneren des mit Wasser gefüllten Leitungseinheitselements über einen Stab, der zwei Enden des Leitungseinheitselements verbindet, und das globale Versetzen des Leitungseinheitselements in Vibration mittels vibrierender Kontakte.

## Claims

1. A method of monitoring the thermomechanical behavior of an undersea pipe for transporting fluid under pressure, the undersea pipe (2) being made by assembling together a plurality of unit pipe elements (4) arranged end to end, the method comprising:

   • a step of determining a mechanical signature specific to each unit pipe element, which step consists in using at least one measurement cable (16) having at least one optical fiber sensor using at least Brillouin backscattering and positioned along the entire length of the unit pipe element to measure the deformations experienced by or simulated on said unit pipe element while it is being subjected on land to various different mechanical stresses in predetermined directions and of predetermined magnitudes, and, on the basis of the deformation measurements, in establishing a stiffness matrix associated with the mechanical signature of the unit pipe element;
   • a step of determining a thermal signature specific to each unit pipe element, which step consists in using at least one measurement cable provided with at least one optical fiber sensor using at least Raman backscattering and positioned along the entire length of the unit pipe element to measure temperature changes of said unit pipe element while it is being subjected on land to various different electrical heating powers, and, on the basis of these temperature measurements, in establishing a thermal transfer function associated with the thermal signature of the unit pipe element; and
   • a monitoring step consisting in recovering the variations in the optical signal injected into the optical fiber sensors while the pipe is in service, and on the basis of these variations in the optical signal, in determining any changes in the mechanical and thermal signatures of each unit pipe element.

2. A method according to claim 1, wherein the stiffness matrix associated with the mechanical signature of each unit pipe element comprises values corresponding to the values of deformation experienced by the unit pipe element while being subjected on land to the various different mechanical stresses, and wherein the thermal transfer function associated with the thermal signature of each unit pipe element comprises values corresponding to the temperature rise values experienced by the unit pipe element while being subjected on land to various different heating powers.

3. A method according to claim 2, wherein determining the deformations experienced by each unit pipe element makes it possible to calculate the values of the stiffness matrix associated with the mechanical signature of each unit pipe element.

4. A method according to any one of claims 1 to 3, wherein the mechanical stresses of predetermined directions and amplitudes applied on land to each unit pipe element comprise one or more of the following stresses: twisting stress; traction/compression stress; bending stress; and pressure stress.

5. A method according to any one of claims 1 to 4, wherein the optical fiber sensor measurement cables are positioned on the unit pipe elements in such a manner as to extend substantially parallel to a longitudinal axis (18) of said pipe.

6. A method according to any one of claims 1 to 5, wherein the measurement cable optical fiber sensors that use Brillouin backscattering are monomode fibers.

7. A method according to any one of claims 1 to 6, wherein the measurement cable optical fiber sensors that use Raman backscattering are multimode fibers.

8. A method according to any one of claims 1 to 7, wherein each unit pipe element (4) comprises an inner tube (6) mounted coaxially inside an outer tube (8), the optical fiber sensor measurement cables being positioned on the inner tube of said unit pipe element.

9. A method according to any one of claims 1 to 8, further comprising:

• a step of determining an acoustic and vibratory signature specific to each unit pipe element, the step consisting in using the measurement cable having the optical fiber sensor that uses at least Brillouin backscattering and that is positioned along the entire length of the unit pipe element to measure the frequency variations of each unit pipe element while it is being subjected on land to various different acoustic and vibratory stresses, and on the basis of these noise variations, to establish an acoustic signature for each unit pipe element; and
• a step of monitoring the acoustic and vibratory integrity of the pipe, which step consists in recovering the frequency variations of the optical signal injected into the optical fiber sensors while the pipe is in service, and on the basis of the frequency variations, in determining any changes in the acoustic and vibratory signature of each unit pipe element.

10. A method according to claim 9, wherein the acoustic and vibratory stresses applied on land to each unit pipe element comprise: emitting noises inside of the unit pipe element filled with air via a bar connecting together the two ends of said unit pipe element, emitting noises inside of the unit pipe element filled with water via a bar connecting together the two ends of said unit pipe element, and setting the entire unit pipe element into vibration by means of vibrating studs.

FIG.1

EP 3 411 668 B1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101713638 A
- CN 102636730 B
- CA 2910468 A1

**Littérature non-brevet citée dans la description**

- *Measurement Science and Technology,* 2006, vol. 17, 1082-1090